# EUROPÄISCHE PATENTANMELDUNG

(11) **EP 1 291 146 A1**
(43) Veröffentlichungstag der Anmeldung: **12.03.2003**
(21) Anmeldenummer: 02015296.3
(22) Anmeldetag: 10.07.2002
(51) Int. Cl.: B29C 45/14

(54) **Verfahren zum Verbinden textiler Werkstoffe**

(30) Priorität: 08.09.2001 DE 10144296
(71) Anmelder: Hachtel, Steffen, 73650 Winterbach (DE)
(72) Erfinder: Die Erfindernennung liegt noch nicht vor
(74) Vertreter: Möbus, Daniela, Dr.-Ing.

(57) **Zusammenfassung**

Ein Verfahren zum Verbinden textiler Werkstoffe (16) mit spritzgegossenen Kunststoffelementen (15), bei dem der textile Werkstoff (16) in eine Fertigungsanlage, in der auch das Aufspritzen des Kunststoffelements (15) erfolgt, eingeführt und vorbehandelt wird.

## Beschreibung

Aus dem Stand der Technik sind Verbindungen zwischen Funktionselementen aus Stahl oder Kunststoff und textilen Materialien bekannt, beispielsweise bei Verschlusselementen von Kleidungsstücken oder Rollringen von Vorhängen. Die Funktionselemente stellen dabei Schnittstellen zu anderen Verschlussteilen oder zu Führungen wie Vorhangschienen oder dergleichen dar. Zur Anbringung der Funktionselemente an dem textilen Material waren bisher jedoch zusätzlich zum Fertigungsschritt der Funktionselemente separate Arbeitsschritte wie Einnähen oder Einfädeln notwendig. Kunststoffelemente werden teilweise auch auf textile Materialien aufgeklebt.

Der vorliegenden Erfindung liegt die Aufgabe zugrunde, ein Verfahren zum Verbinden textiler Werkstoffe mit spritzgegossenen Kunststoffelementen vorzuschlagen, bei dem ein separater Befestigungsschritt des Kunststoffelements am textilen Werkstoff entfällt.

Die Aufgabe wird mit einem Verfahren zum Verbinden textiler Werkstoffe mit spritzgegossenen Kunststoffelementen gelöst, das gekennzeichnet ist durch ein Einführen und Vorbehandeln des textilen Werkstoffs in eine Fertigungsanlage, in der auch das Aufspritzen des Kunststoffelements auf den textilen Werkstoff erfolgt. Vorzugsweise kann dabei der textile Werkstoff ein von einer Vorratsrolle abziehbares Band sein, auf das in regelmäßigen Abständen gleichartige Kunststoffelemente aufgespritzt werden.

Beim erfindungsgemäßen Verfahren wird nun also die Herstellung des Kunststoffelements und seine Verbindung mit dem textilen Werkstoff in einem einzigen Fertigungsschritt erreicht. Wenn der textile Werkstoff ein Band ist, auf das mehrere gleichartige Kunststoffelemente aufgespritzt werden, so können die einzelnen Bandabschnitte mit den Kunststoffelementen ebenfalls noch in der Fertigungsanlage oder anschließend separiert werden.

Für die Art der Verbindung zwischen Kunststoffelement und textilem Werkstoff stehen verschiedene Möglichkeiten zur Verfügung. So kann als textiler Werkstoff ein Kunststoffmaterial verwendet werden, das beim Aufspritzen des Kunststoffelements angeschmolzen wird und somit eine stoffschlüssige Verbindung mit dem Kunststoffelement eingeht. Dabei ist es vorteilhaft, für den textilen Werkstoff und für das Kunststoffelement ähnliche oder identische Materialien, beispielsweise Polyester oder Nylon zu verwenden.

Es besteht jedoch auch die Möglichkeit, für den textilen Werkstoff und das Kunststoffelement Materialien mit guten gegenseitigen Hafteigenschaften zu verwenden. Wie beim Zweikomponenten-Spritzgießverfahren kommt es hier zu einer Verbindung von Kunststoffelement und textilem Werkstoff durch Adhäsion. Als mögliche Werkstoffkombinationen kommen dabei für den textilen Werkstoff beispielsweise Nylon- oder Polyesterfasern und für das Kunststoffelement ABS, SAN, PA, Polyester oder TPU in Frage.

Zur Herstellung des Kunststoffelements kann jedoch auch ein leicht fließender, niedermolekularer thermoplastischer Kunststoff verwendet werden, der in die Zwischenräume der Fasern des textilen Werkstoffs eindringt und einen Formschluss mit dem textilen Werkstoff bewirkt. Ein solcher leicht fließender Kunststoff ist beispielsweise ein leicht fließender POM mit MFI 190/2,16 > 20 gr/10 min. Der Formschluss zwischen Kunststoffelement und textilem Werkstoff kann außerdem noch dadurch erzielt werden, dass in den textilen Werkstoff Aussparungen zur Ermöglichung eines Formschlusses mit dem Kunststoffelement eingebracht werden. Solche Aussparungen lassen sich beispielsweise durch Stanzen und/oder Ultraschall und/oder mittels Pressluft in den textilen Werkstoff vor Aufspritzen des Kunststoffelements einbringen.

Um saubere Stanzkanten zu erzielen, ist es vorteilhaft, den Stanzstempel beispielsweise mittels Pressluft mit hohen Geschwindigkeiten zu betätigen.

Eine Erleichterung des Formschlusses lässt sich auch durch ein Vorprägen einer Formkontur in den textilen Werkstoff vor dem Aufspritzen des Kunststoffelements erreichen. Durch ein solches Vorprägen, insbesondere in Verbindung mit Aussparungen im geprägten Bereich, kann der Kunststoff den textilen Werkstoff von beiden Seiten umschließen.

Mit dem erfindungsgemäßen Verfahren können die unterschiedlichsten Kunststoffelemente mit den unterschiedlichsten textilen Werkstoffen für nahezu beliebige Anwendungen verbunden werden. Von der Erfindung mitumfasst sind dabei insbesondere auch Verschlüsse für Kleidungsstücke, insbesondere für Miederwaren, mit zwei zusammenwirkenden Verschlussteilen, die spritzgegossene Kunststoffelemente sind und nach einem erfindungsgemäßen Verfahren mit einem textilen Trägerteil verbunden worden sind.

Eines der Verschlussteile kann einen hakenförmigen Vorsprung aufweisen, der in eine Öffnung des anderen Verschlussteils einführbar ist. Das Einführen kann dabei auch rastend erfolgen.

Für die Verbindung zwischen dem Kunststoffverschluss und dem textilen Trägermaterial kommen prinzipiell verschiedene Möglichkeiten in Betracht. Bei einer bevorzugten Ausführungsform sind im textilen Trägermaterial Aussparungen eingeformt, die durch das Material der Verschlussteile ausgefüllt sind. Dabei können die Aussparungen innerhalb von Vorprägebereichen des textilen Trägermaterials angeordnet sein, um ein beidseitiges Umschließen des Trägermaterials durch die Kunststoff-Verschlussteile zu gewährleisten.

Desweiteren umfasst die Erfindung beispielsweise auch ein Befestigungselement zur Verankerung eines Vorhangs oder dergleichen an einer Schiene oder einer Stange mit einem Koppelelement aus Kunststoff, das nach einem erfindungsgemäßen Verfahren mit einem textilen Band verbunden wurde. Dieses Band kann an einen Vorhang angenäht werden. Die Koppelelemente lassen sich anschließend mit Rollringen, Gleitern oder dergleichen verbinden, die die eigentliche Befestigung des Vorhangs an einer Schiene oder Decke ermöglichen. Dazu kann das Koppelelement beispielsweise einen sich verbreiternden Kopf, der in einen Schienen- oder Stangengleiter oder einen Rollring einklippsbar ist, aufweisen. Man verwendet also nun das Koppelelement als erstes Kunststoffteil und den Gleiter oder Rollring als zweites Kunststoffteil, die durch Verklippsen oder Verschnappen gefügt werden, anstatt wie bisher ein einziges Bauteil, beispielsweise einen klassischen Rollring. Das Koppelelement, das auf das Textilband aufgespritzt wird, kann geometrisch immer identisch und in sehr großen Stückzahlen gefertigt werden. Das eigentliche Verbindungsteil zu einer Vorhangschiene oder einer Vorhangstange wiederum kann je nach Art der Geometrie der Schiene bzw. der Art der Befestigung an der Schiene individuell gestaltet werden. Die Gestaltung des Verbindungsteils als Gleiter oder Rollring ist dabei nicht mehr abhängig von der Art der Befestigung am Stoff, die ja über das Koppelelement immer gleich ausfällt.

Das Koppelelement kann aus einem leicht fließenden, niedermolekularen Kunststoff gefertigt sein, der sich gut mit den Fasern des textilen Bandes verbindet. Es ist auch möglich, das Koppelelement so auszuformen, dass es den Rand des textilen Bandes übergreift, wodurch ein besonders guter Halt gegeben ist.

Nachfolgend werden anhand bevorzugter Ausführungsbeispiele das erfindungsgemäße Verfahren sowie seine Anwendung zur Herstellung eines Büstenhalterverschlusses und eines Befestigungselements für einen Vorhang näher beschrieben.

Es zeigen:
- Fig. 1: einen Querschnitt durch ein Kunststoffverschlussteil im Verbund mit einem textilen Trägermaterial;
- Fig. 2: eine Draufsicht auf das Verschlussteil aus Fig. 1;
- Fig. 3: einen Querschnitt durch ein zweites Verschlussteil, das mit dem Verschlussteil aus Fig. 1 zusammenwirkt;
- Fig. 4: eine Draufsicht auf das Verschlussteil aus Fig. 3;
- Fig. 5: eine Draufsicht auf das Verschlussteil aus Fig. 3 in verschiedenen Fertigungsphasen;
- Fig. 6: eine schematische Ansicht einer Fertigungsanlage zur Herstellung von Verschlussteilen gemäß Fig. 1 und Fig. 3;
- Fig. 7: einen Querschnitt durch ein Befestigungselement;
- Fig. 8: einen Querschnitt durch ein Befestigungselement, das mit dem Befestigungselement aus Fig. 7 zusammenwirkt;
- Fig. 9: einen Längsschnitt durch einen Vorhang mit dem Befestigungselement aus Fig. 7, das mit einem Rollring gekoppelt ist;
- Fig. 10: einen Längsschnitt durch die Oberkante eines Vorhangs, an die ein Schienengleiter angespritzt ist.

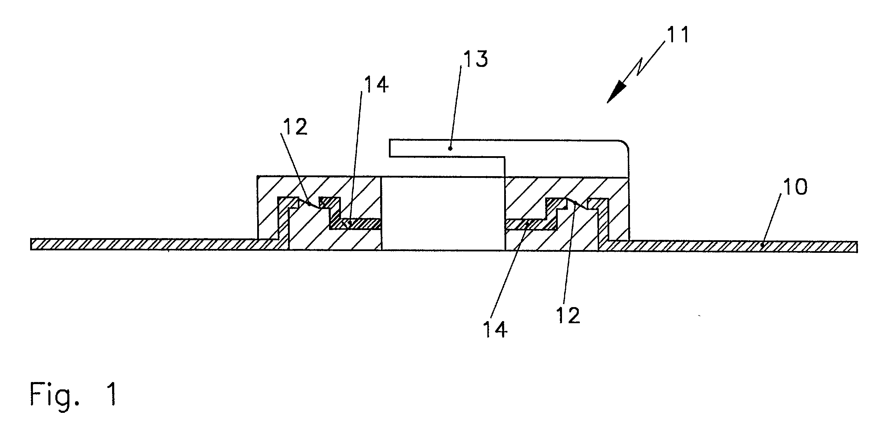

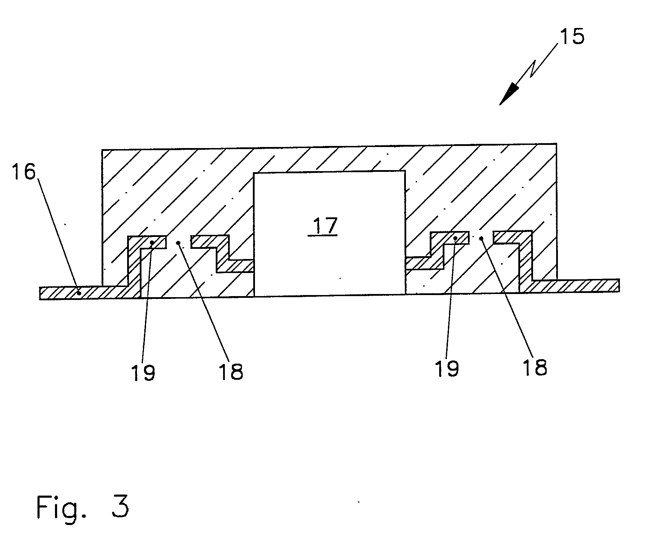

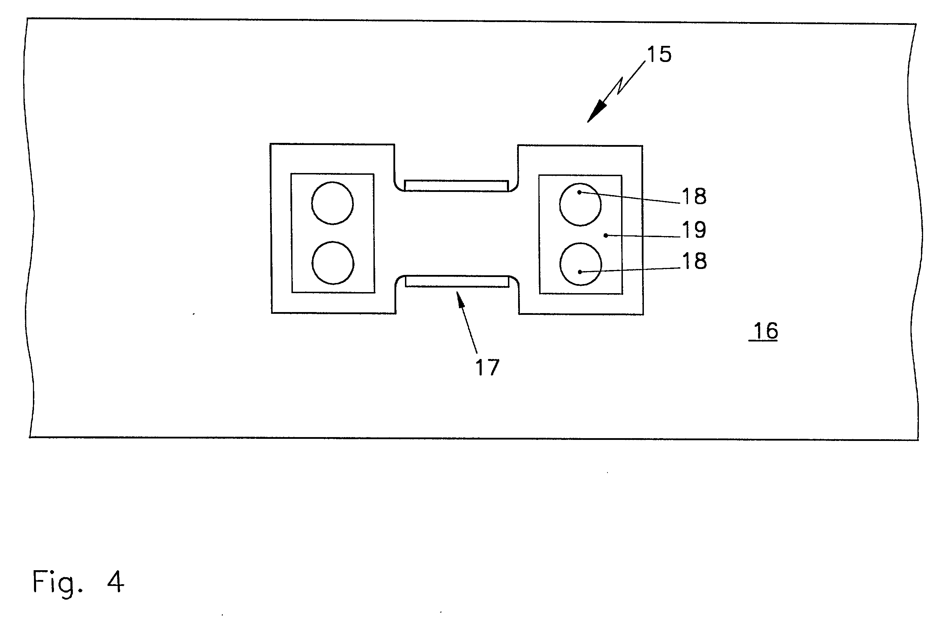

Fig. 1 zeigt einen textilen Werkstoff 10, an dem ein Kunststoffverschlussteil 11 formschlüssig befestigt ist. Dazu ist der textile Werkstoff 10 im Bereich des Kunststoffelements 11 mit Durchbrechungen 12 versehen, durch die das Material des Kunststoffverschlussteils 11 hindurchgedrungen ist, sodass der textile Werkstoff 10 beidseitig von Kunststoff umschlossen ist. Das Verschlussteil 11 ist mit einem hakenförmigen Vorsprung 13 versehen, der mit einem zweiten, in den Fig. 3 und 4 gezeigten Verschlussteil zusammenwirken kann.

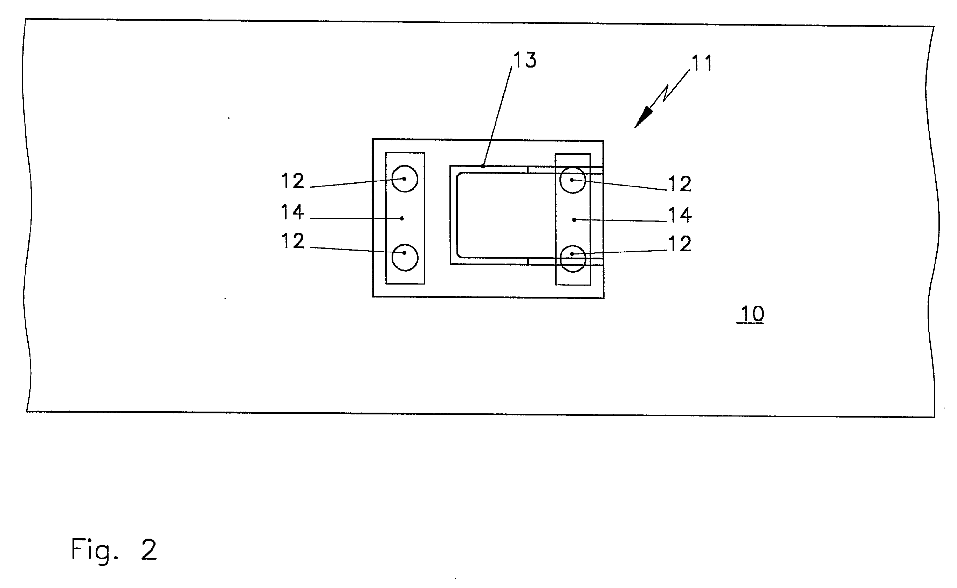

Fig. 2 zeigt das Verschlussteil 11 auf dem textilen Werkstoff 10 in der Draufsicht. Hier ist nun zuerkennen, dass insgesamt vier kreisförmige Durchbrechungen 12 im textilen Trägermaterial 10 vorgesehen sind, die die formschlüssige Verbindung zwischen dem Kunststoffverschlussteil 11 und dem textilen Werkstoff 10 ermöglichen. Die Durchbrechungen 12 liegen im Bereich von Prägeflächen 14, die auch in der Querschnittsdarstellung aus Fig. 1 zu erkennen sind. Die Prägeflächen 14 unterstützen das Hinterfließen des textilen Werkstoffs 10 durch das Material des Kunststoffteils 11.

Fig. 3 zeigt im Querschnitt das Gegenstück 15 zum Verschlussteil 11 aus den Fig. 1 und 2. Auch das Verschlussteil 15 ist formschlüssig mit einem textilen Trägermaterial 16 verbunden. Es weist außerdem eine Öse 17 auf, in die der hakenförmige Vorsprung 13 des Verschlussteils 11 einführbar ist. Wie insbesondere auch Fig. 4 zeigt, wird die formschlüssige Verbindung zwischen dem Teil 15 und dem Trägermaterial 16 wieder durch Durchbrechungen 18, die in Prägebereichen 19 des textilen Trägermaterials 16 eingebracht sind, bewirkt.

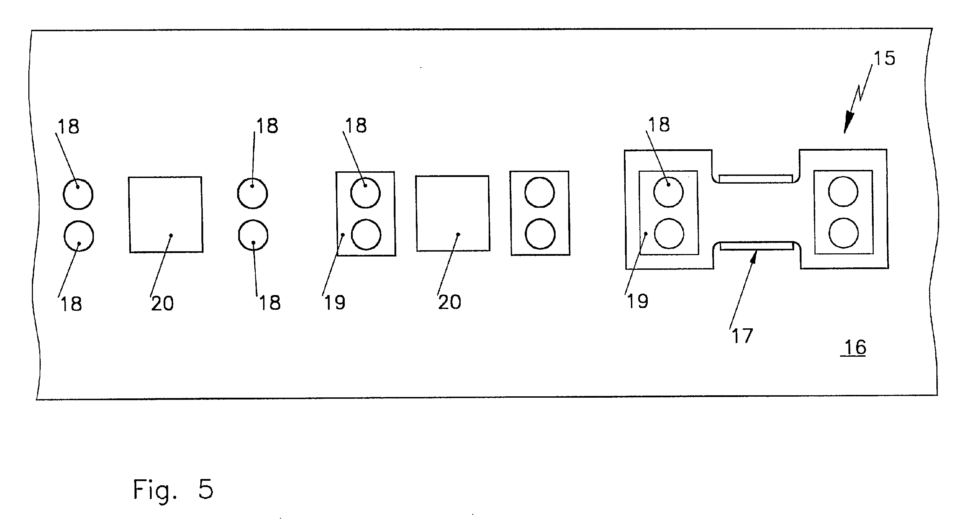

Fig. 5 zeigt schematisch die Herstellung des Kunststoffverschlussteils 15 und seine Verbindung mit dem textilen Trägermaterial 16. Von links nach rechts gesehen ergeben sich folgende Bearbeitungsschritte: Zunächst werden in das textile Trägermaterial 16 die Durchbrüche 18 beispielsweise durch Stanzen mittels Pressluft und/oder durch Ultraschall neben einer zentralen Öffnung 20 eingebracht, die ebenfalls ausgestanzt werden kann. Wird ein Stanzstempel verwendet, so kann dieser zusätzlich erhitzt werden, um den Stanzvorgang zu erleichtern. Nach Einbringen der Durchbrüche 18 und 20 wird das textile Trägermaterial im Bereich der Druchbrüche 18 vorgeprägt, sodass sich Prägeflächen 19 ergeben. Anschließend wird das Kunststoffteil 15 auf das Trägermaterial aufgespritzt, wobei der Kunststoff durch die Durchbrüche 18 im Bereich der Prägeflächen 19 auch auf die Rückseite des Trägermaterial 16 fließt und somit eine formschlüssige Verbindung zwischen dem Kunststoffteil 15 und dem textilen Werkstoff 16 entsteht.

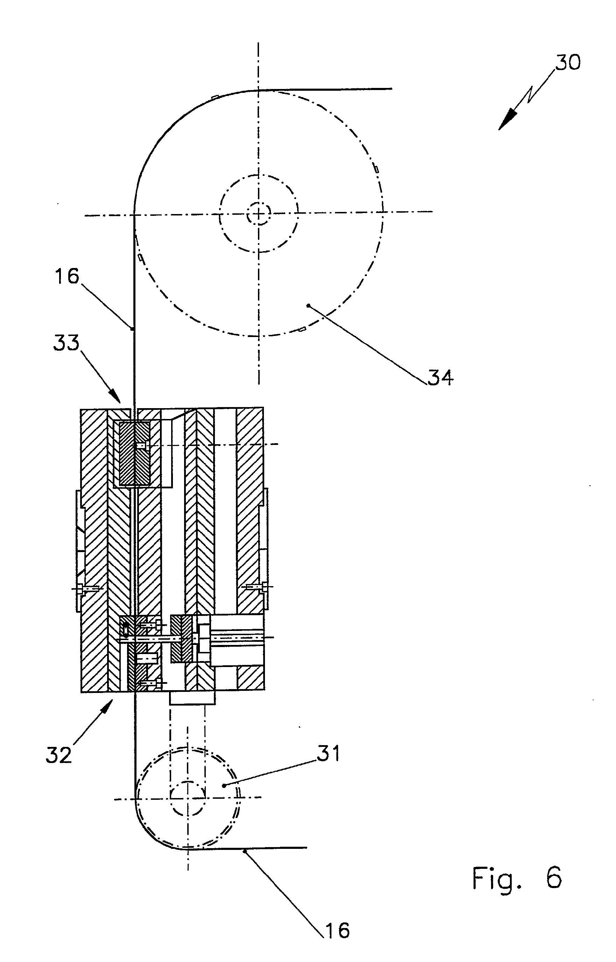

Fig. 6 zeigt schematisch eine Fertigungsanlage 30 zur Herstellung des Verschlussteils 15 und seiner Verbindung mit einem textilen, bandförmigen Werkstoff 16, der von einer hier nicht dargestellten Vorratsrolle über eine Zuführung 31 unter Spannung einem Stanz- und Prägeaggregat 32 zugeführt wird, indem in den textilen Werkstoff 16 die Durchbrüche 18 und 20 eingebracht und die Prägeflächen 19 erzeugt werden. Anschließend wird das Trägermaterial 16 zu einer Spritzgießkavität 33 zur Herstellung des Kunststoffverschlussteils 15 weitertransportiert. Danach wird das textile Trägermaterial 16 mit den aufgebrachten Verschlussteilen 15 von einer Abzugsvorrichtung 34 wieder aus der Anlage 30 herausbefördert. Das Trägermaterial 16 kann im Anschluss daran geschnitten werden, sodass die auf dem textilen Material aufgebrachten Verschlussteile 15 in vereinzelter Form vorliegen.

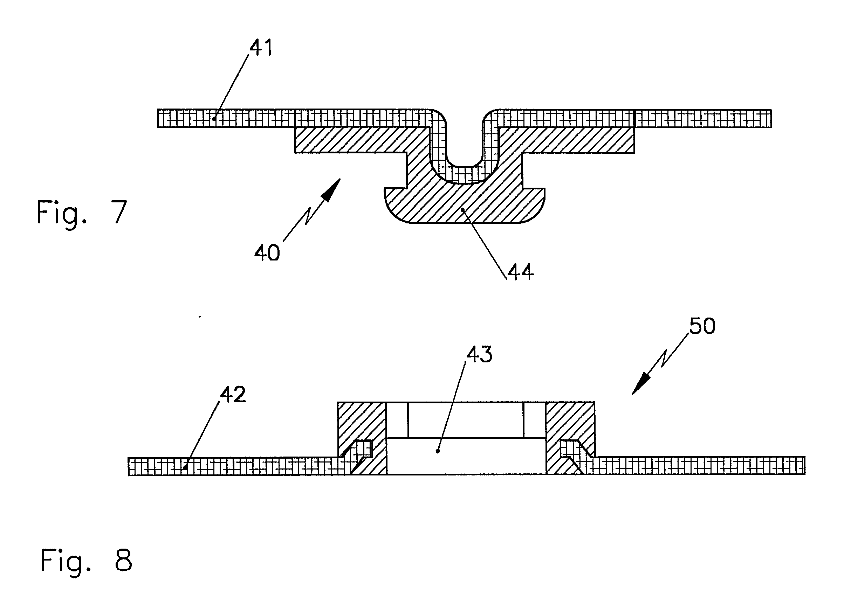

Die Fig. 7 und 8 zeigen jeweils Befestigungselemente 40 und 50, die aus Kunststoff gefertigt sind und mit einem textilen Trägermaterial 41 bzw. 42 verbunden sind. Die Elemente 40 und 50 eignen sich dazu, nach dem Druckknopfprinzip an anderen Elementen befestigt zu werden. So weist das Befestigungselement 40 einen noppenartigen, sich verbreiternden Kopf 44 auf, der beispielsweise in eine entsprechende Aussparung 43 des Befestigungselements 50 einklippsbar ist. Durch die Elemente 40 und 50 können somit die beiden textilen Träger 41 und 42 aneinander befestigt werden.

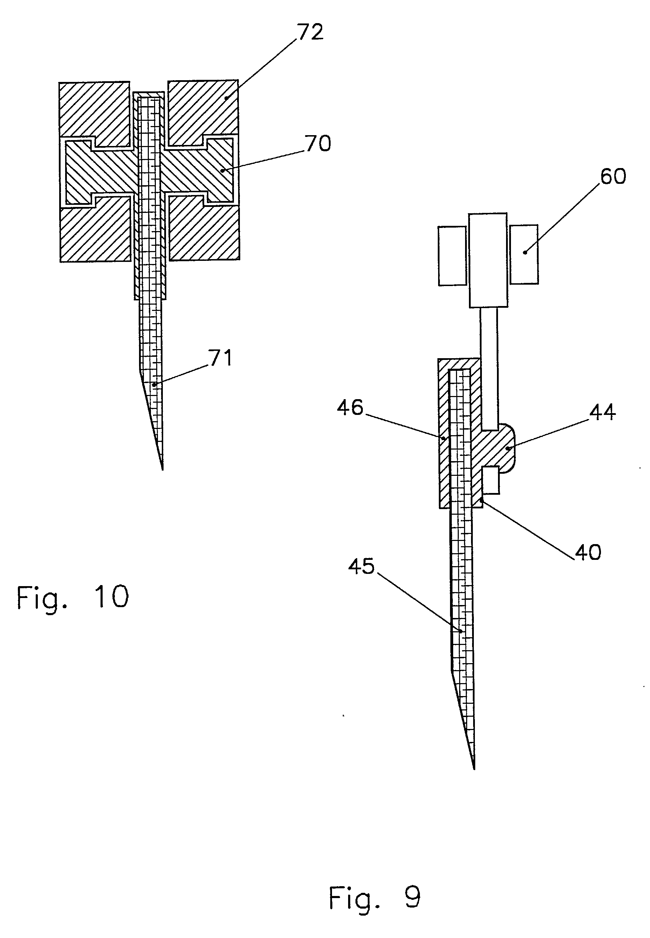

Fig. 9 zeigt eine weitere, besonders bevorzugte Anwendung des Befestigungselements 40, das hier um die Oberkante eines Vorhangbandes 45 herumgespritzt ist, also auch einen Abschnitt 46 aufweist, der auf der Rückseite des Vorhangbandes 45 befestigt ist. Der Noppenkopf 44 des Elements 40 ist in eine Öse eines Rollrings 60 eingeklippst, mit dem der Vorhang 45 in einer Schiene bewegbar ist. Auch dieses Element 40 kann mit Hinterschnitten, die in das Band 45 eingebracht werden, mit einem besseren Formschluss versehen werden.

Fig. 10 zeigt für eine ganz ähnliche Anwendung einen Kunststoffgleiter 70, der um die Oberkante eines Vorhangbandes 71 herumgespritzt ist und zur Führung eines nicht näher dargestellten Vorhangs, an den das Vorhandband angenäht wurde, in einer Schiene 72 dient.

Die Elemente 40 und 70 sind beide an Textilbänder angespritzt, die anschließend an einen Vorhang angenäht werden können. Bei dem Element 40 ergibt sich dabei der Vorteil, dass verschiedene Befestigungselemente, beispielsweise ein Rollring 60, aber auch ein Gleiter oder ein Stangenring mit dem Kopf 44 des Elements 40 verbunden werden können, sodass je nach Bedarf an das immer gleich ausgeformte Element 40 unterschiedliche Befestigungselemente für den Vorhang angebracht werden können.

Alle Bauteile können mit Hilfe der eingebrachten Druchbrüche mittels Formschluss mit dem textilen Material verbunden werden. Die Befestigung der Kunststofffunktionselemente kann jedoch bei allen Bauteilen auch über Adhäsion zwischen textilem Material und Kunststoff, durch Anschmelzen der Textilfasern sowie durch Eindringen eines nicht fließenden Kunststoffmaterials zwischen die Textilfasern verbunden werden.

## Patentansprüche

1. Verfahren zum Verbinden textiler Werkstoffe (10, 16, 41, 42, 45, 71) mit spritzgegossenen Kunststoffelementen (11, 15, 40, 50, 70), **gekennzeichnet durch** ein Einführen und Vorbehandeln des textilen Werkstoffs (10, 16, 41, 42, 45, 71) in eine Fertigungsanlage (30), in der auch das Anspritzen des Kunststoffelements (11, 15, 40, 50, 70) erfolgt.

2. Verfahren nach Anspruch 1, **dadurch gekennzeichnet, dass** der textile Werkstoff (10, 16, 41, 42, 45, 71) ein von einer Vorratsrolle abziehbares Band ist, auf das in regelmäßigen Abständen gleichartige Kunststoffelemente (11, 15, 40, 50, 70) aufgespritzt werden.

3. Verfahren nach Anspruch 1 oder 2, **dadurch gekennzeichnet, dass** als textiler Werkstoff (10, 16, 41, 42, 45, 71) ein Kunststoffmaterial verwendet wird, das beim Aufspritzen des Kunststoffelements (11, 15, 40, 50, 70) angeschmolzen wird und somit eine stoffschlüssige Verbindung mit dem Kunststoffelement (11, 15, 40, 50, 70) eingeht.

4. Verfahren nach Anspruch 3, **dadurch gekennzeichnet, dass** für den textilen Werkstoff (10, 16, 41, 42, 45, 71) und für das Kunststoffelement (11, 15, 40, 50, 70) ähnliche oder identische Materialien verwendet werden.

5. Verfahren nach Anspruch 4, **dadurch gekennzeichnet, dass** das Material Polyester oder Nylon ist.

6. Verfahren nach Anspruch 1 oder 2, **dadurch gekennzeichnet, dass** für den textilen Werkstoff (10, 16, 41, 42, 45, 71) und das Kunststoffelement (11, 15, 40, 50, 70) Materialien mit guten gegenseitigen Hafteigenschaften verwendet werden.

7. Verfahren nach Anspruch 6, **dadurch gekennzeichnet, dass** für den textilen Werkstoff (10, 16, 41, 42, 45, 71) Nylonoder Polyesterfasern und für das Kunststoffelement (11, 15, 40, 50, 70) ABS, SAN, PA, Polyester oder TPU verwendet werden.

8. Verfahren nach Anspruch 1 oder 2, **dadurch gekennzeichnet, dass** für das Kunststoffelement (11, 15, 40, 50, 70) ein leicht fließender, niedermolekularer thermoplastischer Kunststoff verwendet wird, der in die Zwischenräume der Fasern des textilen Werkstoffs (10, 16, 41, 42, 45, 71) eindringt und einen Formschluss mit dem textilen Werkstoff bewirkt.

9. Verfahren nach Anspruch 8, **dadurch gekennzeichnet, dass** für das Kunststoffelement (11, 15, 40, 50, 70) ein leicht fließendes POM mit MFI 190/2,16 > 20 gr/min verwendet wird.

10. Verfahren nach einem der Ansprüche 1 bis 9, **dadurch gekennzeichnet, dass** in den textilen Werkstoff (10, 16) Aussparungen (12, 18) zur Ermöglichung eines Formschlusses mit dem Kunststoffelement (11, 15) eingebracht werden.

11. Verfahren nach Anspruch 10, **dadurch gekennzeichnet, dass** die Aussparungen (12, 18) durch Stanzen und/oder Ultraschall und/oder mittels Pressluft in den textilen Werkstoff (10, 16) eingebracht werden.

12. Verfahren nach einem der Ansprüche 1 bis 11, **dadurch gekennzeichnet, dass** der textile Werkstoff (10, 16) vor dem Aufspritzen des Kunststoffelements vorgeprägt (14, 19) wird.

13. Verfahren nach einem der Ansprüche 1 bis 12, **dadurch gekennzeichnet, dass** die einzelnen Verfahrensschritte durch ein Folgeverbundwerkzeug in einem Prozess durchgeführt werden.

14. Verschluss für Kleidungsstücke, insbesondere für Miederwaren, mit zwei zusammenwirkenden Verschlussteilen (11, 15), die spritzgegossene Kunststoffelemente sind und nach einem Verfahren nach einem der Ansprüche 1 bis 13 mit einem textilen Trägerteil (10, 16) verbunden worden sind.

15. Verschluss nach Anspruch 14, **dadurch gekennzeichnet, dass** eines der Verschlussteile (11) einen hakenförmigen Vorsprung (13), der in eine Öffnung (17) des anderen Verschlussteils (15) einführbar ist, aufweist.

16. Verschluss nach Anspruch 14 oder 15, **dadurch gekennzeichnet, dass** im textilen Trägermaterial (10) Aussparungen (12) eingeformt sind, die durch das Material der Verschlussteile (11, 15) ausgefüllt sind.

17. Verschluss nach Anspruch 16, **dadurch gekennzeichnet, dass** die Aussparungen (12) innerhalb von Vorprägebereichen (14) des textilen Trägermaterials (10) angeordnet sind.

18. Befestigungselement zur Verankerung eines Vorhangs oder dergleichen an einer Schiene oder Stange mit einem Koppelelement (40, 50) aus Kunststoff, das nach einem Verfahren nach einem der Ansprüche 1 bis 13 mit einem textilen Band (41, 42, 45) verbunden wurde.

19. Befestigungselement nach Anspruch 18, **dadurch gekennzeichnet, dass** das Koppelelement (40) einen sich verbreiternden Kopf (44), der in einen Schienen- oder Stangengleiter (70) oder einen Rollring (60) einklippsbar ist, aufweist.

20. Befestigungselement nach Anspruch 18 oder 19, **dadurch gekennzeichnet, dass** das Koppelelement (40) aus einem leicht fließenden, niedermolekularen Kunststoff gefertigt ist.

21. Befestigungselement nach einem der Ansprüche 18 bis 20, **dadurch gekennzeichnet, dass** das Koppelelement (40) den Rand des textilen Bandes (45) übergreift.

22. Befestigungselement nach einem der Ansprüche 18 bis 21, **dadurch gekennzeichnet, dass** das Koppelelement (40) aus einem sehr leicht fließenden POM mit MFI 190/2,16 > 20 gr/10 min gefertigt ist.
